(19) Europäisches Patentamt

European Patent Office

Office européen des brevets

(11) **EP 0 825 724 A2**

(12) **EUROPÄISCHE PATENTANMELDUNG**

(43) Veröffentlichungstag:
   **25.02.1998 Patentblatt 1998/09**

(51) Int. Cl.$^6$: **H04B 1/16, H02M 3/158**

(21) Anmeldenummer: **97202490.5**

(22) Anmeldetag: **12.08.1997**

(84) Benannte Vertragsstaaten:
   **AT BE CH DE DK ES FI FR GB GR IE IT LI LU MC NL PT SE**

(30) Priorität: **21.08.1996 DE 19633664**

(71) Anmelder:
   • **Philips Patentverwaltung GmbH**
     **22335 Hamburg (DE)**
     Benannte Vertragsstaaten:
     **DE**

• **PHILIPS ELECTRONICS N.V.**
  **5621 BA Eindhoven (NL)**
  Benannte Vertragsstaaten:
  **FR GB**

(72) Erfinder:
   **Fischer, Harald, Dipl.-Ing.**
   **22335 Hamburg (DE)**

(74) Vertreter: **Schmalz, Günther et al**
   **Philips Patentverwaltung GmbH,**
   **Röntgenstrasse 24**
   **22335 Hamburg (DE)**

(54) **Elektrisches Gerät mit Energiespeicher**

(57)   Die Erfindung betrifft ein elektrisches Gerät, insbesondere Funkgerät, mit einem zur Stromversorgung dienenden Energiespeicher (6).

Um eine hohe Flexibilität in Bezug auf die Verwendbarkeit verschiedener Energiespeicher mit unterschiedlichem Entladeverhalten sicherzustellen, ist eine Schaltungsanordnung (14) zur Umwandlung einer vom Energiespeicher gelieferten Spannung ($U_E$) in mindestens eine zur Spannungsversorgung von Schaltungen des elektrischen Geräts dienenden, annähernd konstanten und vorgebbaren Versorgungsspannung ($U_{out}$) vorgesehen. Die Schaltungsanordnung (14) reduziert in einem ersten Schaltzustand als Abwärts-Wandler eine vom Energiespeicher (6) gelieferte Spannung ($U_E$) auf die Versorgungsspannung ($U_{out}$) reduziert und erhöht in einem zweiten Schaltzustand als Aufwärts-Wandler eine vom Energiespeicher (6) gelieferte Spannung ($U_E$) auf die Versorgungsspannung ($U_{out}$). Die Schaltunganordnung (14) enthält Bauelemente (L, R, S, D, $C_1$), die sowohl zur Verwendung im Abwärts-Wandler als auch zur Verwendung im Aufwärts-Wandler dienen.

Fig.4

EP 0 825 724 A2

Printed by Xerox (UK) Business Services
2.15.11/3.4

**Beschreibung**

Die Erfindung betrifft ein elektrisches Gerät, insbesondere Funkgerät, mit einem zur Stromversorgung dienenden Energiespeicher.

Auf dem Gebiet der Mobilfunkendgeräte geht in Entwicklung auf immer kleinere und leichtere Endgeräte. Gerade in Bezug auf das Gerätegewicht spielen die verwendeten Energiespeicher eine bedeutende Rolle, die einen großen Anteil am Gesamtgewicht der Geräte ausmachen. Als Energiespeicher werden in der Regel Akkumulatoren verwendet. Bei der Ausführung der Energiespeicher ist man gleichzeitig bestrebt, eine größtmögliche Benutzungszeit mit der im Energiespeicher speicherbaren Energie zu erreichen. In der Zeitschrift Funkschau 2/95 wird auf Seite 52 auf die Verwendung von Lithium-Akkumulatoren in Mobilfunkendgeräten nach dem GSM-Standard ("Global System of Mobile communications") hingewiesen. Zur Realisierung von Mobilfunkendgeräten mit derartigen Akkumulatoren werden keine näheren Angaben gemacht. Hier stellt sich insbesondere das Problem der Anpassung auf das gegenüber anderen Energiespeichern abweichende Entladeverhalten.

Der Erfindung liegt daher die Aufgabe zugrunde, ein elektrisches Gerät der eingangs genannten Art zu schaffen, das eine hohe Flexibilität in Bezug auf die Verwendbarkeit verschiedener Energiespeicher mit unterschiedlichem Entladeverhalten aufweist.

Die Aufgabe wird dadurch gelöst, daß eine Schaltungsanordnung zur Umwandlung einer vom Energiespeicher gelieferten Spannung in mindestens eine zur Spannungsversorgung von Schaltungen des elektrischen Geräts dienenden, annähernd konstanten und vorgebbaren Versorgungsspannung vorgesehen ist, daß die Schaltungsanordnung in einem ersten Schaltzustand als Abwärts-Wandler eine vom Energiespeicher gelieferte Spannung auf die Versorgungsspannung reduziert, daß die Schaltungsanordnung in einem zweiten Schaltzustand als Aufwärts-Wandler eine vom Energiespeicher gelieferte Spannung auf die Versorgungsspannung erhöht und daß Bauelemente der Schaltungsanordnung sowohl zur Verwendung im Abwärts-Wandler als auch zur Verwendung im Aufwärts-Wandler dienen. Insbesondere sind softwaregesteuerte Schalter vorgesehen, von deren Schalterstellung es abhängt, ob die sowohl zur Verwendung im Abwärts-Wandler als auch im Aufwärts-Wandler dienenden Bauelemente als Teil des Abwärts- oder als Teil des Aufwärts-Wandlers wirken.

Mit dem Abwärts-Wandler läßt sich eine gegenüber der benötigten Versorgungsspannung zu große vom Energiespeicher gelieferten Spannung auf den benötigten Wert verkleinern. Entsprechend läßt sich mit Hilfe des Aufwärts-Wandlers die vom Energiespeicher gelieferte Spannung gegebenenfalls vergrößern, wenn die vom Energiespeicher gelieferte Spannung kleiner als die benötigte Versorgungsspannung ist. Dies ist insbesondere vorteilhaft bei der Verwendung von Lithium-Energiespeichern, d.h. Lithium-Akkumulatoren oder -Batterien, deren Ausgangsspannung beim Entladen abfällt und einen Spannungsbereich überschreitet, der sowohl oberhalb als auch unterhalb üblicher Versorgungsspannungen für elektronische Komponenten liegt, so daß eine Anpassung der gelieferten Spannung an den benötigten Versorgungsspannungswert sowohl durch Vergrößern als auch durch Verkleinern erforderlich ist. Durch die Verwendung von Bauteilen sowohl für den Aufwärts- als auch für den Abwärts-Wandler wird der schaltungstechnische Aufwand reduziert, wobei die software-gesteuerte Umschaltung zwischen Aufwärts- und Abwärts-Wandler eine schnelle Reaktion dann erlaubt, wenn die abfallende vom Energiespeicher gelieferte Spannung den Wert der benötigten Versorgungsspannung erreicht. Übliche Toleranzschwellen sind hier selbstverständlich zu berücksichtigen. Anstelle der software-gesteuerten Umschaltung sind auch mittels analoger Technik ausgeführte Steuerschaltungen zur Umschaltung geeignet, deren Flexibilität allerdings sehr eingeschränkt ist.

Eine bevorzugte Ausführungsform besteht darin, daß die Schaltungsanordnung eine Induktivität, einen Widerstand, eine Diode, eine Kondensatoranordnung und einen Schalter, dessen Schaltfrequenz softwaregesteuert ist, enthält, die im ersten Schaltzustand der Schaltungsanordnung als Abwärtswandler und im zweiten Schaltzustand der Schaltungsanordnung als Aufwärtswandler wirken. Dabei ist insbesondere vorgesehen, daß im ersten Schaltzustand der Schaltungsanordnung die vom Energiespeicher gelieferte Spannung zwischen einem Massepotential und einem Anschluß einer aus der Induktivität und dem Widerstand bestehenden Reihenschaltung anliegt, der andere Anschluß der aus der Induktivität und dem Widerstand bestehenden Reihenschaltung einerseits mit einem Anschluß des eine softwaregesteuerte Schaltfrequenz aufweisenden Schalters, dessen anderer Anschluß auf Massepotential liegt, und andererseits mit der Anode der Diode verbunden ist, die Kondensatoranordnung zwischen der Kathode der Diode und dem Massepotential liegt und die Versorgungsspannung an der Kondensatoranordnung abgegriffen wird, und daß im zweiten Schaltzustand der Schaltungsanordnung die vom Energiespeicher gelieferte Spannung zwischen dem Massepotential und einem Anschluß des eine softwaregesteuerte Schaltfrequenz aufweisenden Schalters anliegt, dessen anderer Anschluß einerseits mit der Kathode der Diode und andererseits mit einem Anschluß einer aus der Induktivität und dem Widerstand bestehenden Reihenschaltung verbunden ist, die Kondensatoranordnung zwischen dem anderen Anschluß der aus der Induktivität und dem Widerstand bestehenden Reihenschaltung und dem Massepotential liegt und die Versorgungsspannung ebenfalls an der Kondensatoranordnung abgegriffen wird. Damit wird eine Schaltungsrealisierung mit möglichst geringem Aufwand erreicht. Die Anzähl erforderlicher Bauelemente ist ebenso wie der Aufwand zur Realisierung der Software-Steuerung zur Steuerung der Schalter gering.

Enthält die Kondensatoranordnung mehrere Kondensatoren, von denen mindestens ein Kondensator softwaregesteuert unwirksam geschaltet werden kann, um die Gesamtkapazität der Kondensatoranordnung je nach Vorliegen des ersten oder zweiten Schaltzustandes zu verändern, läßt sich auf einfache Weise eine geeignete und ausreichend schnelle Anpassung der Gesamtkapazität der Kondensatoranordnung an die erforderlichen Werte bei der Verwendung als Aufwärts-Wandlerbestandteil und als Abwärts-Wandlerbestandteil umsetzen.

Werden die Schaltunganordnung und die zur Steuerung ihres Schaltzustandes vorgesehenen Mittel auf einem einzigen Chip angeordnet, ergibt sich eine gerade für die Massenproduktion kostengünstige Realisierung der Erfindung.

Die Erfindung bezieht sich auch auf eine Schaltungsanordnung zur Umwandlung einer variablen ersten Spannung in mindestens eine annähernd konstante und vorgebbare zweite Spannung, welche in einem ersten Schaltzustand als Abwärts-Wandler die erste Spannung auf die zweite Spannung reduziert, welche in einem zweiten Schaltzustand als Aufwärts-Wandler die erste Spannung auf die zweite Spannung erhöht und bei der Bauelemente vorgesehen sind, die sowohl zur Verwendung im Abwärts-Wandler als auch zur Verwendung im Aufwärts-Wandler dienen. Insbesondere weist die Schaltungsanordnung mittels Softwaresteuerung steuerbare Schalter auf, von deren Schalterstellung es abhängt, ob die sowohl zur Verwendung im Abwärts-Wandler als auch im Aufwärts-Wandler dienenden Bauelemente als Teil des Abwärts- oder als Teil des Aufwärts-Wandlers wirken.

Die Erfindung wird im folgenden anhand der Zeichnungen näher erläutert. Es zeigen:

Fig. 1 ein Blockschaltbild eines als Funkgerät ausgeführten elektrischen Geräts,

Fig. 2 eine Anordnung zur Erzeugung einer Versorgungsspannung aus einer Energiespeicherspannung,

Fig. 3 die Entladefunktion eines Lithium-Energiespeichers,

Fig. 4 eine Schaltungsanordnung zur Erzeugung einer Versorgungsspannung aus einer Energiespeicherspannung,

Fig. 5 die Schaltungsanordnung gemäß Fig. 4 mit der Funktion eines Aufwärts-Wandlers,

Fig. 6 die Schaltungsanordnung gemaß Fig. 4 mit der Funktion eines Abwärts-Wandlers und

Fig. 7 einen Ausschnitt aus dem Zeitverlauf eines Steuersignals zur Steuerung eines Schalters, der zur Umsetzung des Aufwärts-Wandlers gemäß Fig. 5 und des Abwärts-Wandlers gemäß Fig. 6 eingesetzt wird.

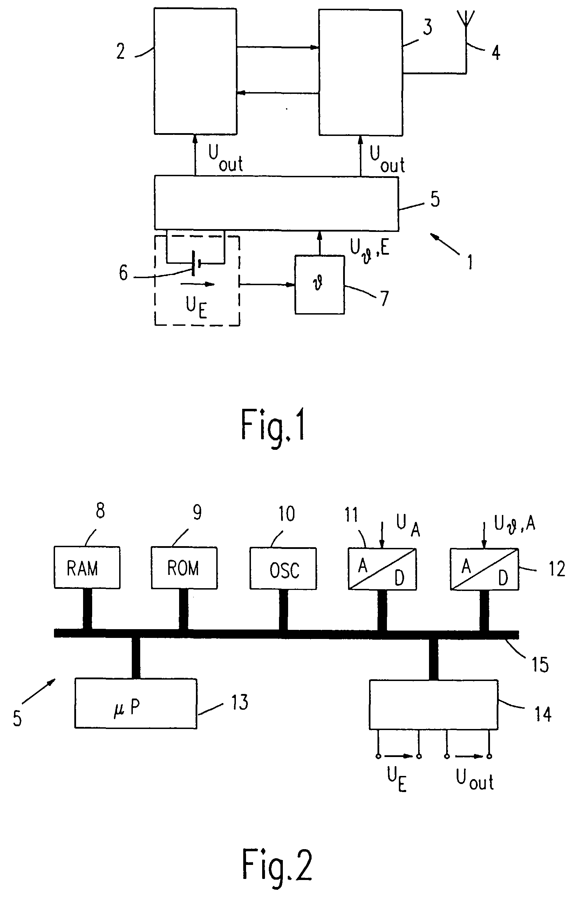

In Fig. 1 ist ein hier als Funkgerät ausgeführtes elektrisches Gerät 1 dargestellt, dessen digitale Komponenten in einem Funktionsblock 2 zusammengefaßt sind. Der Funktionsblock 2 umfaßt beispielsweise einen Basisbandumsetzer, einen digitalen Signalprozessor, einen Mikroprozessor und Speichermittel wie ROM und RAM. Auch ein Mikroprozessor kann durch den Funktionsblock 2 erfaßt sein. Der Funktionsblock 2 enthält die digitale Signalverarbeitung des Funkgeräts 1 ausführenden Komponenten. Ein Funktionsblock 3 umfaßt die Sende-/Empfangseinheit des Funkgeräts 1 mit RF-Teil und IF-Teil und Leistungsverstärkerschaltungen. Die Komponenten der Funktionseinheit 3 korrespondieren mit den Komponenten der Funktionseinheit 2. Die Sende/Empfangseinheit der Funktionseinheit 3 ist mit einer Antenne 4 gekoppelt, über die Funksignale gesendet und empfangen werden. Das Funkgerät 1 enthält eine im vorliegenden Fall als separater Chip realisierte Funktionseinheit 5, die zur Erzeugung einer zur Stromversorgung der Komponenten des Funkgeräts 1 dienenden Versorgungsspannung $U_{out}$ aus einer von einem Energiespeicher 6 gelieferten Spannung $U_E$ dient. Der Energiespeicher 6 ist im vorliegenden Fall als Lithium-Akkumulator realisiert. Aber auch eine Realisierung als Lithium-Batterie oder eine Realisierung Mittels anderer Energiespeichertypen ist möglich. Eine Vorrichtung 7 dient zur Messung der Temperatur des Energiespeichers 6 und leitet aus der gemessenen Temperatur eine Steuerspannung $U_{\vartheta,E}$ ab, die zur Weiterverarbeitung der Funktionseinheit 5 zugeführt wird. Die Vorrichtung 7 enthält beispielsweise ein Thermoelement. Mittels der Temperaturmessung kann beispielsweise eine Überhitzung des Energiespeichers 6 detektiert werden, so daß weitere Maßnahmen eingeleitet werden können, um eine Schädigung des Energiespeichers zu vermeiden. Außerdem ist eine Temperaturmessung beim Laden des Energiespeichers erforderlich, das unter Verwendung von in einem Festwertspeicher 9 (s. Fig. 2) gespeicherten Ladealgorithmen durchgeführt wird.

Mit Fig. 2 wird der Aufbau des Funktionsblocks 5 näher erläutert. Er ist im vorliegenden Fall als separater Chip ausgeführt, der einen Schreib-/Lesespeicher (RAM) 8, den bereits erwähnten und als Programmspeicher dienenden Festwertspeicher (ROM) 9, einen Oszillator 10, zwei Analog-Digital-Umsetzer 11 und 12, eine mikroprozessorfunktionen ausübende Steuereinheit 13 und eine Schaltungsanordnung 14. Die mit den Bezugszeichen 8 bis 14 bezeichneten Komponenten sind über ein Chip-internes Bussystem 15 miteinander gekoppelt, so daß eine gegenseitige Kommunikation ermöglicht wird. Der Analog-Digital-Umsetzer 11 dient dabei zur Digitalisierung der gerade vorliegenden Ausgangsspannung $U_E$ des Energiespeichers 6. Der Analog-Digital-Umsetzer 12 digitalisiert die Temperaturmeßspannung $U_{\vartheta,E}$. Die im folgenden noch näher erläuterte Schaltungsanordnung 14 wird mit Hilfe von im Festwertspeicher 9 gespeicherter Programme/Softwaregesteuert.

Sie erzeugt aus der ihr zugeführten Energiespeicherspannung $U_E$ eine Versorgungsspannung $U_{out}$, die zur Stromversorgung von Komponenten des Funkgeräts 1 dient. Die Versorgungsspannung $U_{out}$ ist, wie später noch gezeigt wird, variabel. Außerdem können zur Erzeugung unterschiedlicher Versorgungsspannungen $U_{out}$ auch mehrere Schaltungsanordnungen parallel betrieben werden.

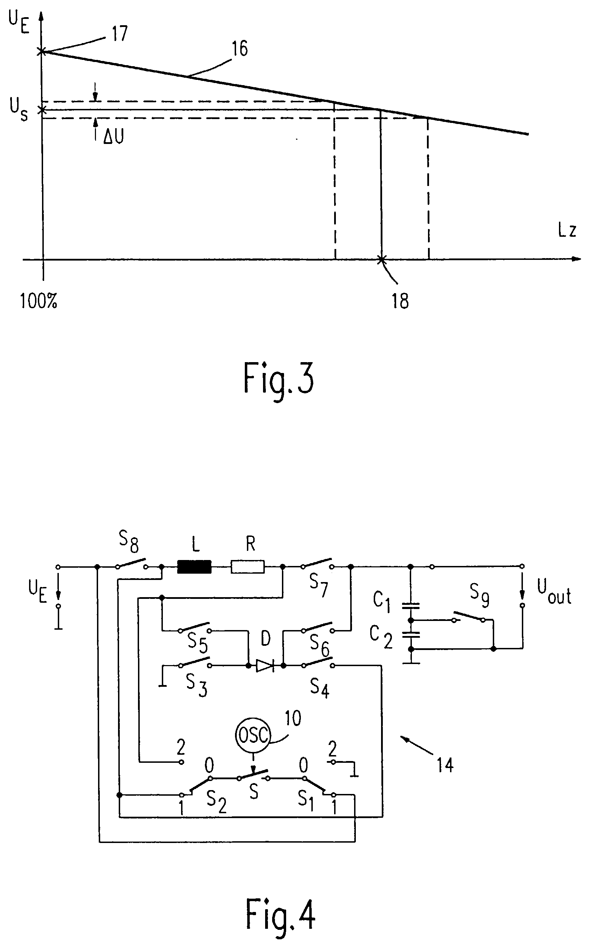

Anhand von Fig. 3 wird der Verlauf der Energiespeicherspannung $U_E$ eines Lithium-Energiespeichers (Lithium-Akkumulator oder Lithium-Batterie) in Abhängigkeit von seinem Ladezustand Lz näher beschrieben. Der Lithium-Energiespeicher 6 hat eine im wesentlichen lineare Entladekurve 16. Im voll geladenen Zustand (Punkt 17) liefert ein Lithium-Akkumulator beispielsweise ungefähr eine Spannung $U_E$ von 4 Volt. Beim Entladen sinkt die gelieferte Spannung $U_E$ auf ungefähr 2,1 Volt ab. Es ist eine Schwellenspannung $U_s$ eingezeichnet, deren Wert dem Wert der Versorgungsspannung $U_{out}$ entspricht, der zur Strom- bzw. Spannungsversorgung von Komponenten des Funkgeräts 1 erforderlich ist. Ein typischer Wert für $U_s$ ist 2,7 Volt. Dieser Wert ist aus einer typischen Versorgungsspannung für digitale Komponenten des Funkgeräts 1 abgeleitet, die gleich 3 Volt +/- 10 % ist. Beim Erreichen der Schwellenspannung $U_s$ ist der durch den Punkt 18 gekennzeichnete Ladezustand Lz erreicht. Dieser Wert liegt im vorliegenden Beispiel im Bereich zwischen 40 und 50 %. Die Bedeutung der Schwellenspannung $U_s$ wird aus den Erläuterungen zu den folgenden Figuren ersichtlich.

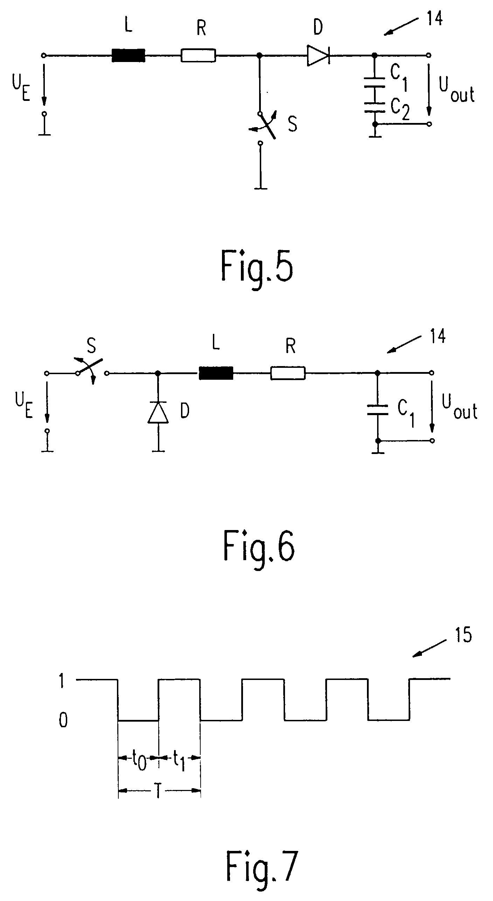

Durch Figur 4 wird der Aufbau der Schaltungsanordnung 14 verdeutlicht. Die Schaltungsanordnung 14 enthält eine Induktivität L, einen Widerstand R, eine Diode D, einen Schalter S und Kondensatoren $C_1$ und $C_2$. Der Schalter S wird mit einer Frequenz geöffnet und geschlossen, die vom softwaregesteuerten Oszillator 10 (siehe Fig. 2) bestimmt wird. Es sind weiterhin als Halbleiterschalter ausgeführte Schalter $S_1$, $S_2$, ..., $S_9$ vorgesehen, von deren Stellung es abhängt, ob die Schaltungsanordnung 14 als Aufwärts-Wandler oder als Abwärts-Wandler arbeitet. Befinden sich die Schalter $S_1$ und $S_2$ in der Position 02, sind die Schalter $S_5$ und $S_6$ und $S_8$ geschlossen und sind die übrigen Schalter $S_3$, $S_4$, $S_7$ und $S_9$ geöffnet, so wirkt die Schaltungsanordnung 14 als Aufwärts-Wandler. Der resultierende Aufwärts-Wandler ist zur Verdeutlichung in Fig. 5 bezeichnet. Befinden sich dagegen die Schalter $S_1$ und $S_2$ in der Position 01, sind die Schalter $S_3$, $S_4$, $S_7$ und $S_9$ geschlossen und die übrigen Schalter $S_5$, $S_6$ und $S_8$ geöffnet, so wirkt die Schaltungsanordnung 14 als Abwärts-Wandler. Die sich ergebende Anordnung eines Abwärts-Wandlers ist zur Verdeutlichung in Fig. 6 dargestellt.

Die Steuerung der Schalter $S_1$ bis $S_9$ erfolgt mittels der Steuereinheit 13 (siehe Fig. 2). Sie erfolgt demgemäß softwaregesteuert unter Zuhilfenahme von im Festwertspeicher 9 abgelegter Programmteile. Dazu wertet die Funktionseinheit 5 die Energiespeicherspannung $U_E$ aus. Erreicht gemessene Spannung $U_E$ beim Entladen des Energiespeichers 6 die Schwellenspannung $U_s$ gemäß Fig. 3 werden die Schalter $S_1$ bis $S_9$ so umgeschaltet, daß eine Umschaltung von der Funktion als Abwärts-Wandler in die Funktion als Aufwärts-Wandler wie oben bereits erläutert erfolgt. Vorzugsweise wird ein Toleranzbereich $\Delta U$ (typisch einige Zehntel Volt) definiert, der die Schwellenspannung $U_s$ umfaßt und bei dessen Erreichen durch die Spannung $U_E$ die Umschaltung von der Abwärts-Wandler-Funktion auf die Aufwärts-Wandler-Funktion erfolgt. Dies ist eine für die Praxis vorteilhafte Realisierung, wenn eine Messung der Spannung $U_E$ nicht durchgehend, sondern in regelmäßigen Abständen erfolgt. Dann wird sichergestellt, daß eine Umschaltung der Schalter $S_1$ bis $S_9$ dann erfolgt, wenn die Spannung $U_E$ möglichst nah an der Schwellenspannung $U_s$ liegt.

Befindet sich die Schaltungsanordnung 14 im Schaltzustand mit der Funktion des Aufwärts-Wandlers, wird deren Funktion durch das Schaltbild gemäß Fig. 5 beschrieben. Die Spannung $U_E$ liegt zwischen einem Massepotential und einem Anschluß einer Reihenschaltung aus der Induktivität L und dem Widerstand R. Der andere Anschluß der Reihenschaltung aus der Induktivität L und dem Widerstand R ist mit einem Anschluß des Schalters S und der Anode der Diode D verbunden. Der andere Anschluß des Schalters S liegt auf dem Massepotential. Die Kathode der Diode D ist mit einem Anschluß der Reihenschaltung aus den Kondensatoren $C_1$ und $C_2$ verbunden. Der andere Anschluß der Reihenschaltung aus den Kondensatoren $C_1$ und $C_2$ ist mit dem Massepotential verbunden. An dieser Reihenschaltung bzw. zwischen der Kathode der Diode D und dem Massepotential wird die Versorgungsspannung $U_{out}$ abgegriffen.

Fig. 6 zeigt das Schaltbild der Schaltungsanordnung 14, wenn diese als Abwärts-Wandler wirkt. Dann liegt die Spannung $U_E$ zwischen dem Massepotential und einem Anschluß des Schalters S dessen anderer Anschluß mit der Kathode der Diode D und einem Anschluß der Reihenschaltung aus der Induktivität L und dem Widerstand R verbunden ist. Die Anode der Diode D liegt auf Massepotential der andere Anschluß der Reihenschaltung aus der Induktivität L und dem Widerstand R ist mit einem Anschluß des Kondensators $C_1$ verbunden, dessen anderer Anschluß auf Massepotential liegt. Am Kondensator $C_1$ wird die Versorgungsspannung $U_{out}$ abgegriffen. Da der Schalter $S_9$ geschlossen ist, ist der Kondensator $C_2$ kurzgeschlossen und unwirksam. Er taucht in diesem Schaltbild deshalb nicht auf. Durch Variierung der Schaltfrequenz des Schalters S läßt sich das Verhältnis der Spannung $U_{out}$ zur Energiespeicherspannung $U_E$ an Änderungen der Spannung $U_E$ anpassen. Die Anpassung erfolgt softwaregesteuert durch Auswertung der gemessenen Spannung $U_E$ so, daß eine im wesentlichen konstante Versorgungsspannung $U_{out}$ erzeugt wird. Dazu wird der als Halbleiterschalter ausgeführte Schalter S vom Oszillator 10 mit einem bezüglich seiner Periodendauer T variablen Digitalsignal 15 versorgt, das schematisch in Fig. 7 dargestellt ist. Dort ist beispielhaft eine Periode T des Digitalsignals 15 gekennzeichnet, die sich additiv aus der Zeitdauer $t_1$ und der Zeitdauer $t_0$ zusammensetzt. Die Zeitdauer $t_0$ steht dabei für die Zeitdauer des Anlegens einer logischen "0" und die Zeitdauer $t_1$ für das Anlegen einer logischen "1" an einen nicht dargestellten Steuereingang des Schalters S. Das Anlegen einer logischen "1" bewirkt ein Schließen des Schalters S, ein Anliegen einer logischen "0" bewirkt den geöffneten Zustand des Schalters S.

Es ergibt sich für den Aufwärts-Wandler

$$U_{out}/U_E = T/t_0$$

und für den Abwärts-Wandler

$$U_{out}/U_E = t_1/T.$$

Durch Variation von $t_0$, $t_1$ und T läßt somit $U_{out}$ je nach Bedarf ändern. Insbesondere ist es auch möglichst, mit der Schaltungsanordnung 14 die erzeugte Versorgungsspannung $U_{out}$ je nach Bedarf zeitweise zu variieren. Beispielsweise können Komponenten des Funkgeräts 1, die nicht gleichzeitig aktiv sind und unterschiedlich hohe Versorgungsspannungen benötigen, allein mit Hilfe der Schaltungsanordnung 14 versorgt werden.

Die Gesamtkapazität C der Reihenschaltung aus $C_1$ und $C_2$ des Aufwärts-Wandlers gemäß Fig. 5 ergibt sich zu

$$C = T \cdot I_{E,max}/\Delta U_E.$$

Die Kapazität $C_1$ des Abwärts-Wandlers gemäß Fig. 6 ergibt sich zu

$$C_1 = I_{E,min} \cdot T/(4 \cdot \Delta U_E).$$

Dabei steht $I_{E,max}$ für den maximal vom Energiespeicher 6 zu liefernden Systemstrom und $I_{E,min}$ für den von dem Energiespeicher 6 minimal zu liefernden Systemstrom. Der maximale und minimale Systemstrom ergibt sich aus dem maximalen bzw. minimalen Stromverbrauch der Komponenten des Funkgeräts 1. $\Delta U_E$ steht für den Spannungshub den die Kondensatoren $C_1$ und $C_2$ als Glättungskondensatoren auszugleichen haben. $C_2$ hat hier den Wert $C_1/4$.

**Patentansprüche**

1. Elektrisches Gerät, insbesondere Funkgerät, mit einem zur Stromversorgung dienenden Energiespeicher (6),
   dadurch gekennzeichnet,

   daß eine Schaltungsanordnung (14) zur Umwandlung einer vom Energiespeicher gelieferten Spannung ($U_E$) in mindestens eine zur Spannungsversorgung von Schaltungen des elektrischen Geräts dienenden, annähernd konstanten und vorgebbaren Versorgungsspannung ($U_{out}$) vorgesehen ist,
   daß die Schaltungsanordnung (14) in einem ersten Schaltzustand (s. Fig. 6) als Abwärts-Wandler eine vom Energiespeicher (6) gelieferte Spannung ($U_E$) auf die Versorgungsspannung ($U_{out}$) reduziert,
   daß die Schaltungsanordnung (14) in einem zweiten Schaltzustand (s. Fig. 5) als Aufwärts-Wandler eine vom Energiespeicher (6) gelieferte Spannung ($U_E$) auf die Versorgungsspannung ($U_{out}$) erhöht
   und daß Bauelemente (L, R, S, D, $C_1$) der Schaltungsanordnung (14) sowohl zur Verwendung im Abwärts-Wandler als auch zur Verwendung im Aufwärts-Wandler dienen.

2. Elektrisches Gerät nach Anspruch 1,
   dadurch gekennzeichnet,

   daß die Schaltungsanordnung (14) softwaregesteuerte Schalter (S1, ..., S9) aufweist, von deren Schalterstellung es abhängt, ob die sowohl zur Verwendung im Abwärts-Wandler als auch im Aufwärts-Wandler dienenden Bauelemente (L, R, S, D, $C_1$) als Teil des Abwärts- oder als Teil des Aufwärts-Wandlers wirken.

3. Elektrisches Gerät nach Anspruch 1 oder 2,
   dadurch gekennzeichnet,

   daß der Energiespeicher (6) ein Lithium-Energiespeicher ist.

4. Elektrisches Gerät nach einem der Ansprüche 1 bis 3,
   dadurch gekennzeichnet,

   daß die Schaltungsanordnung (14) eine Induktivität (L), einen Widerstand (R), eine Diode (D), eine Kondensatoranordnung ($C_1$, $C_2$) und einen Schalter (S), dessen Schaltfrequenz (!/T) softwaregesteuert ist, enthält, die im ersten Schaltzustand der Schaltungsanordnung (14) als Abwärtswandler und im zweiten Schaltzustand der Schaltungsanordnung als Aufwärtswandler wirken.

5. Elektrisches Gerät nach Anspruch 4,
   dadurch gekennzeichnet,

   daß im ersten Schaltzustand der Schaltungsanordnung

die vom Energiespeicher (6) gelieferte Spannung ($U_E$) zwischen einem Massepotential und einem Anschluß einer aus der Induktivität (L) und dem Widerstand (R) bestehenden Reihenschaltung anliegt,

der andere Anschluß der aus der Induktivität (L) und dem Widerstand (R) bestehenden Reihenschaltung einerseits mit einem Anschluß des eine softwaregesteuerte Schaltfrequenz aufweisenden Schalters (S), dessen anderer Anschluß auf Massepotential liegt, und andererseits mit der Anode der Diode (D) verbunden ist,

die Kondensatoranordnung ($C_1$, $C_2$) zwischen der Kathode der Diode (D) und dem Massepotential liegt und

die Versorgungsspannung ($U_{out}$) an der Kondensatoranordnung ($C_1$, $C_2$) abgegriffen wird,

und daß im zweiten Schaltzustand der Schaltungsanordnung

die vom Energiespeicher (6) gelieferte Spannung ($U_{out}$) zwischen dem Massepotential und einem Anschluß des eine softwaregesteuerte Schaltfrequenz aufweisenden Schalters (6) anliegt, dessen anderer Anschluß einerseits mit der Kathode der Diode (D) und andererseits mit einem Anschluß einer aus der Induktivität (L) und dem Widerstand (R) bestehenden Reihenschaltung verbunden ist,

die Kondensatoranordnung ($C_1$, $C_2$) zwischen dem anderen Anschluß der aus der Induktivität (L) und dem Widerstand (R) bestehenden Reihenschaltung und dem Massepotential liegt und

die Versorgungsspannung ($U_{out}$) ebenfalls an der Kondensatoranordnung ($C_1$, $C_2$) abgegriffen wird.

6. Elektrisches Gerät nach Anspruch 4 oder 5,
   dadurch gekennzeichnet,

   daß die Kondensatoranordnung ($C_1$, $C_2$) mehrere Kondensatoren enthält, von denen mindestens ein Kondensator ($C_2$) softwaregesteuert unwirksam geschaltet werden kann, um die Gesamtkapazität der Kondensatoranordnung je nach Vorliegen des ersten oder zweiten Schaltzustandes zu verändern.

7. Elektrisches Gerät nach einem der Ansprüche 1 bis 6,
   dadurch gekennzeichnet,

   daß die Schaltunganordnung (14) und die zur Steuerung ihres Schaltzustandes vorgesehenen Mittel (8, 9, 10, 11, 12, 13, 15) auf einem einzigen Chip angeordnet sind.

8. Schaltungsanordnung zur Umwandlung einer variablen ersten Spannung ($U_E$) in mindestens eine annähernd konstante und vorgebbare zweite Spannung ($U_{out}$), welche in einem ersten Schaltzustand als Abwärts-Wandler die erste Spannung ($U_E$) auf die zweite Spannung ($U_{out}$) reduziert, welche in einem zweiten Schaltzustand als Aufwärts-Wandler die erste Spannung ($U_E$) auf die zweite Spannung ($U_{out}$) erhöht und bei der Bauelemente (L, R, S, D, $C_1$) vorgesehen sind, die sowohl zur Verwendung im Abwärts-Wandler als auch zur Verwendung im Aufwärts-Wandler dienen.

9. Schaltungsanordnung nach Anspruch 8,
   dadurch gekennzeichnet,

   daß die Schaltungsanordnung mittels Softwaresteuerung steuerbare Schalter (S1, ..., S9) aufweist, von deren Schalterstellung es abhängt, ob die sowohl zur Verwendung im Abwärts-Wandler als auch im Aufwärts-Wandler dienenden Bauelemente (L, R, S, D, $C_1$) als Teil des Abwärts- oder als Teil des Aufwärts-Wandlers wirken.

Fig.1

Fig.2

Fig.3

Fig.4

Fig.5

Fig.6

Fig.7